# EUROPÄISCHE PATENTSCHRIFT

(11) **EP 0 852 881 B1**
(45) Veröffentlichungstag und Bekanntmachung des Hinweises auf die Patenterteilung: **22.01.2003**
(21) Anmeldenummer: 96943000.8
(22) Anmeldetag: 18.09.1996
(51) Int. Cl.: H04Q 1/14, H01R 9/24

(54) **KONTAKTBAUTEIL UND LEITUNGSANSCHLUSSVERFAHREN FÜR EINEN VERTEILER IN EINER TELEKOMMUNIKATIONSANLAGE**
CONTACT COMPONENT AND METHOD OF CABLE CONNECTING FOR A DISTRIBUTOR IN A TELECOMMUNICATION FACILITY
COMPOSANT DE CONTACT ET PROCEDE DE CONNEXION DES CABLES POUR UN DISTRIBUTEUR DANS UNE INSTALLATION DE TELECOMMUNICATION

(30) Priorität: 26.09.1995 DE 19535773; 26.09.1995 DE 19535774
(43) Veröffentlichungstag der Anmeldung: 15.07.1998
(73) Patentinhaber: CCS Technology, Inc., Wilmington, DE 19803 (US)
(72) Erfinder: KUNZE, Dieter, D-82061 Neuried (DE)
(74) Vertreter: Sturm, Christoph, Dipl.-Ing.
(86) Internationale Anmeldenummer: DE9601766
(87) Internationale Veröffentlichungsnummer: WO97012418

(56) Entgegenhaltungen:
- DE-A- 2 048 104
- DE-A- 2 901 766
- DE-C- 4 423 339
- US-A- 4 210 375

## Beschreibung

Die Erfindung bezieht sich auf ein Kontaktbauteil und ein Leitüngsanschlußverfahren für einen Verteiler in einer Telekommunikationsanlage, wobei die stapelbaren Kontaktbauteile mit Kontaktteilen versehen sind, die in reihenweisen angeordneten Anschlußelementen für kommende und für abgehenden Leitungen enden.

Ein derartiger Verteiler ist z.B. durch die EP-B 0 073 740 bekannt geworden. Danach sind die Kontaktbauteile in einen Tragrahmen des Verteilers eingerastet und stapelartig übereinander fixiert. Die mit den ankommenden Leitungen verbundenen Kontaktteile sind U-förmig gebogen und an beiden Enden als Schneidklemmen ausgebildet, an denen die ankommenden und abgehenden Leitungen angeschlossen werden können. Die Kontaktteile weisen ferner freigeschnittene Kontaktfedern auf, die ebenfalls U-förmig gebogen sind. Zwischen den beiden Schenkeln der Kontaktteile ist ein Hohlraum gebildet, in den ein zusätzliches Gehäuseteil mit zusätzlichen Kontaktteilen zum Anschluß von abgehenden Leitungen einsetzbar ist. Dabei werden die zusätzlichen Kontaktteile mit den Kontaktfedern des anderen Gehäuseteils trennbar kontaktiert. Das zusätzliche Gehäuseteil verdeckt allerdings die darunter liegenden Schneidklemmen, so daß diese nicht mehr zugänglich sind. Aufgrund der zweidimensionalen Erstreckung der Kontaktteile sind die Gehäuseteile relativ dick und kompliziert. Die vielfach gebogenen Kontaktteile sind ebenfalls von komplexer Gestalt und entsprechend aufwendig herstellbar.

Ferner ist durch die DE-C 26 58 296 ein stapelbares scheibenartig flaches Kontaktbauteil bekannt geworden, daß aus zwei Gehäuseteilen zusammengesetzt ist, wobei sich die Trennebene senkrecht zu den flachen Außenseiten erstreckt. Vor dem Zusammensetzen sind die Kontaktteile für die ankommenden und abgehenden Leitungen an einem der Gehäuseteile fixiert und werden beim Zusammenstecken in Aufnahmekammern des anderen Gehäuseteils eingeführt. Dieses ist mit Rasthaken versehen, die komplementäre Rastschultern des anderen Gehäuseteils hintergreifen und so die beiden Gehäuseteile zusammenhalten. Auch hier sind die Gehäuseteile von komplexer Form und entsprechend aufwendig herstellbar.

Kontaktbauteile mit den merkmalen des oberbegriffts des patentanspruchs 1 sind bekannt aus US-A-4 210 375 und DE-A-2048104.

Der Erfindung liegt die Aufgabe zugrunde, ein flaches Kontaktbauteil zu schaffen, das mit geringem Aufwand hergestellt und montiert werden kann.

Diese Aufgabe wird durch die Erfindung gemäß Anspruch 1 gelöst.

Vorteilhafte Weiterbildungen der Erfindung sind in den Ansprüchen 2 bis 15 gekennzeichnet.

Die sich wechselseitig hintergreifenden Ansätze nach Anspruch 2 können in der Nähe der Federkontakte angeordnet sein, so daß die Kontaktkräfte auf kurzem Wege abgefangen werden. Es ist möglich, die Ansätze so auszubilden, daß die Halbscheiben fest miteinander verrastet werden können.

Durch die Halte- und Führungsmittel nach Anspruch 3 ist es möglich, die Halbscheiben zeitlich getrennt und unabhängig voneinander in den Aufnahmerahmen einzusetzen. So können z.B. zunächst eine größere Anzahl von Halbscheiben mit den angeschlossenen ankommenden Kabeln in den Aufnahmerahmen eingesetzt werden. Erst danach können die anderen Halbscheiben der Reihe nach eingefügt und zu den Kontaktbauteilen komplettiert werden.

Durch die Anordnung nach Anspruch 4 werden die Kabel an der Rückseite des Aufnahmerahmens an die Kontaktteile herangeführt. Da diese Anschlüsse später nicht mehr geändert werden müssen, brauchen sie nach dem Einsetzen nicht mehr zugänglich zu sein. Die Kabel können unmittelbar von der Rückseite weg geführt werden, so daß die restlichen Seiten der Kontaktbauteile für andere Verdrahtungsarbeiten freibleiben. Die auf der Frontseite gelegenen Anschlußelemente dienen z.B. dem Anschluß von öfter zu ändernden Rangierdrähten und sind entsprechend gut zugänglich.

Durch die Weiterbildungen nach den Ansprüchen 5 bis 7 können die ankommenden Kabel unmittelbar mit den abgehenden Kabeln an jeweils eines der Kontaktbauteile angeschlossen und miteinander verbunden werden. Bei elektronischen Vermittlungseinrichtungen ist es möglich, mit Hilfe einer Lage-Rufnummerumschaltung Teilnehmer unter Beibehaltung ihrer alten Rufnummer an neue Anschlüsse zu verlegen, ohne daß dazu Rangierdrähte verlegt werden müssen. Dennoch kann es bei einer geringen Anzahl von Teilnehmern vorkommen, daß sie z.B. über Rangierdrähte an andere Dienste, z.B. an eine ISDN-Vermittlungsstelle angeschlossen werden. In diesen Fällen kann die unmittelbare Verbindung mittels Trennsteckern unterbrochen werden und vom frontseitigen Anschlußelement eine Rangierleitung zu einem anderen Einbauplatz oder zu einem anderen Verteilerbereich verlegt werden.

Durch die Weiterbildung nach Anspruch 8 kann die Kontaktfeder einstückig in einfacher Weise mit dem Kontaktteil verbunden und ausgebildet werden.

Durch die Weiterbildung nach Anspruch 9 wird verhindert, daß die rückseitigen Anschlußelemente in den Aufnahmeraum für das angrenzende Nachbarbauteil hineinragt, so daß die Halbscheiben in beliebiger Reihenfolge in den Aufnahmerahmen eingesetzt werden können.

Durch die Weiterbildung nach Anspruch 10 ist es möglich, die Halbscheiben in bedienfreundlicher Weise von vorn in den Aufnahmerahmen einzusetzen und dabei ohne zusätzlichen Arbeitsgang miteinander zum Kontaktbauteil zu verbinden.

Durch die Weiterbildung nach Anspruch 11 können nun die Anschlußarbeiten in bequemer Weise an dem speziell ausgebildeten Montageplatz vorgenommen werden. Dieser kann z.B. vor dem Einbauplatz in einer geeigneten Höhe angeordnet sein und besondere Hilfsmittel aufweisen, die die Anschlußarbeiten erleichtern. Danach kann das Kontaktbauteil mit den angeschlossenen Leitungen in den Einbauplatz in einfacher Weise eingeschoben und darin verrastet werden. Dies ermöglicht insbesondere bei Kontaktbauteilen für hoch oder tief gelegene Einbauplätze ein erheblich schnelleres und ergonomisch günstigeres Arbeiten. Auf zusätzliche Kabelstecker und entsprechende Steckverbindungen kann dabei verzichtet werden.

Das Kontaktbauteil mit dem angeschlossenen Kabel nach Anspruch 12 kann bereits werkseitig fertigstellt werden. Dabei ist es von Vorteil, das Kontaktbauteil mit geringen Querschnittsabmessungen auszubilden, um es leichter durch die vorgegebenen Durchführungen und Kanäle hindurchziehen zu können. Das Anschließen kann dabei mit Hilfe von automatischen Einrichtungen besonders kostengünstig durchgeführt werden.

Durch den mobilen Montageplatz nach Anspruch 13 ist es möglich, Kontaktbauteile in ähnlicher Weise bereits an verlegte Kabel anzuschließen. Dabei wird der Montageplatz in der Nähe der Einbauplätze angeordnet. Die Kabelenden werden aus dem Verteilergestell bis zum Montageplatz herausgezogen und dort an die Kontaktbauteile angeschlossen. Danach werden sie zusammen mit dem Kabelende in das Verteilergestell zurückverlegt. Sodann kann das Kontaktbauteil in seinen Einbauplatz eingesetzt werden. Dabei ist es von Vorteil, die Anschlußstellen für die in Kabeln ankommenden Leitungen auf der Rückseite des Kontaktbauteils anzuordnen, so daß die Kabel von der Frontseite ferngehalten werden. Die z.B. als Rangierleitungen ausgebildeten abgehenden einzelnen Leitungen können dann nach Bedarf an die frontseitig angeordneten Anschlußelemente angeschlossen und zu anderen Kontaktbauteilen verlegt werden.

Durch die Weiterbildung nach Anspruch 14 können die Abmessungen des Teilgehäuses soweit verringert werden, daß sie mit den Abmessungen eines Steckers vergleichbar sind. Sie lassen sich dann entsprechend leichter durch die Kabelkanäle und Engstellen hindurchführen.

Durch die Weiterbildung nach Anspruch 15 können die von den Vermittlungseinrichtungen ankommenden Kabeln unmittelbar mit den zu den Teilnehmern führenden Kabeln verbunden werden. Eine Rangiermöglichkeit kann dadurch geschaffen werden, daß der Trennkontakt unterbrochen wird und daß zusätzliche Rangierleitungen zu anderen Kontaktbauteilen verlegt werden, die an anderen Kabeln angeschlossen sind.

Ausführungsbeispiele der Erfindung sind in der Zeichnung dargestellt und werden im Folgenden näher erläutert.

Es zeigen:
- Figur 1: schematisiert eine perspektivische Ansicht eines Aufnahmerahmens mit eingesetzten Kontaktbauteilen,
- Figur 2: einen Schnitt durch das aus zwei Halbscheiben zusammengesetzte Kontaktbauteil nach Figur 1,
- Figur 3: einen Schnitt durch ein anderes Kontaktbauteil mit eingesetzten Kontaktteilen,
- Figur 4: eine Draufsicht auf eines der Kontaktteile nach Figur 3,
- Figur 5: und 6 weitere Kontaktbauteile von ähnlichem Aufbau wie nach Figur 3,
- Figur 7: übereinandergestapelte Halbscheiben des Kontaktbauteils nach Figur 3,
- Figur 8: zeigt perspektivisch ein anderes Kontaktbauteil mit Anschlußelementen für Leitungen zur Signalübertragung,
- Figur 9: das Kontaktbauteil nach Figur 8 in einer Schnittdarstellung,
- Figur 10: eine Seitenansicht von übereinander gestapelten Kontaktbauteilen nach Figur 8 in einem Verteiler einer Telekommunikationsanlage mit einer Montagevorrichtung.

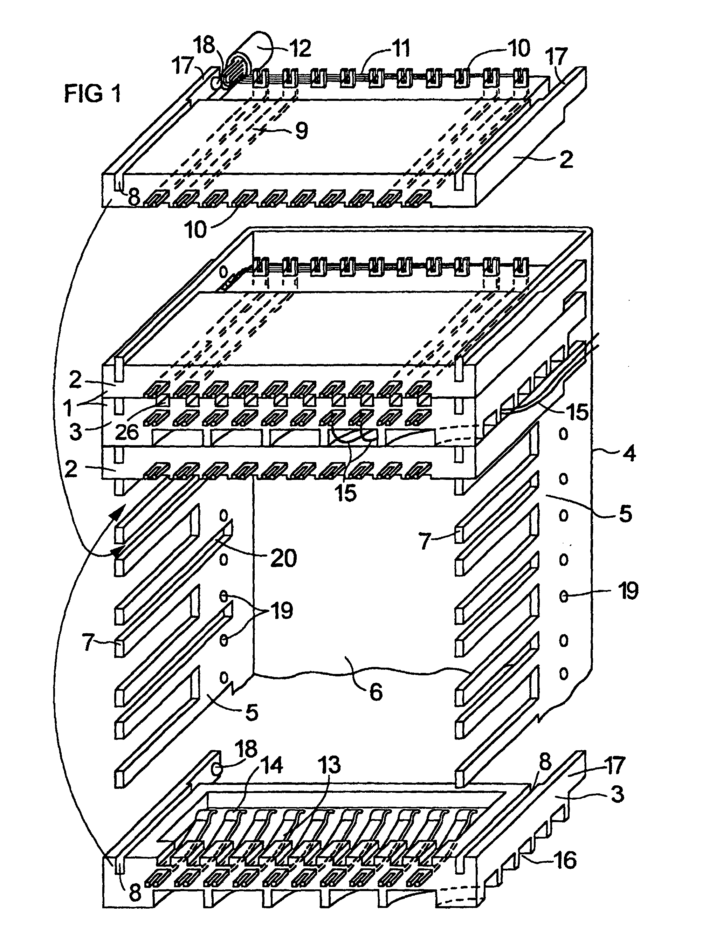

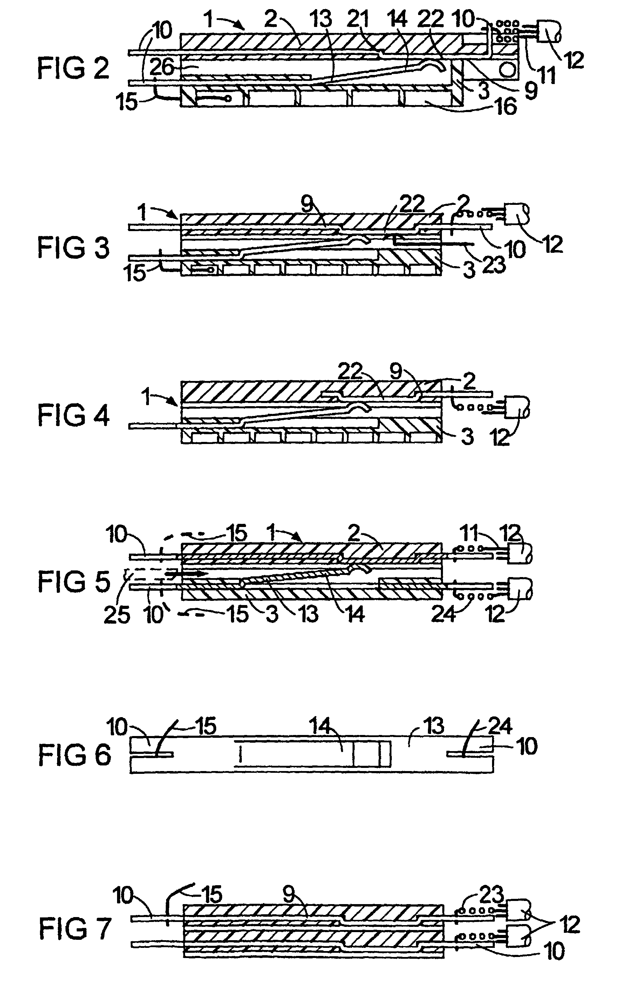

Nach den Figuren 1 und 2 ist ein scheibenartig flaches Kontaktbauteil 1 sandwichartig aus einer ersten Halbscheibe 2 und einer zweiten Halbscheibe 3 zusammengesetzt. Ein Aufnahmerahmen 4 ist aus einem Blech U-förmig gebogen und in seinen Seitenschenkeln 5 mit kammartig angeordneten, zur Basis 6 senkrecht stehenden Führungsstegen 7 versehen.

Die scheibenartigen Halbscheiben 2, 3 sind in ihrer Draufsicht im wesentlichen rechteckig ausgebildet. Sie weisen in der Nähe zweier einander gegenüberliegender Außenkanten Führungsschlitze 8 auf, deren Querschnitt dem Querschnitt der Führungsstege 7 angepaßt ist, wobei für jede der Halbscheiben2, 3 ein Paar Führungsstege 7 vorgesehen ist. Nach Figur 1 sind bereits einige Halbscheiben 2, 3 in den Aufnahmerahmen eingeschoben, wobei die Führungsstege 7 in die Führungsschlitze 8 eingreifen und wobei jede Halbscheibe 2,3 zwischen zwei benachbarten Führungsstegen 7 gehalten ist. Zwei weitere Halbscheiben 2, 3 sind oberhalb und unterhalb des Aufnahmerahmens 4 dargestellt und gemäß dem bogenförmigen Pfeilen in den Aufnahmerahmen 4 einsetzbar.

Eine erste Halbscheibe 2 ist mit Kontaktteilen 9 versehen, die sich geradlinig von der der Basis 6 abgewandten Frontseite zur gegenüberliegenden Rückseite erstrecken. Sie bilden an ihren beiden Enden als Schneidklemmen ausgebildete Anschlußelemente 10. An die rückseitigen Anschlußelemente 10 sind von der Rückseite her ankommende Leitungen 11 eines Kabels 12 angeschlossen. Dieses führt z.B. zu einer elektronischen Vermittlungseinrichtung einer Telekommunikationsanlage. Die frontseitigen Anschlußelemente 10 der ersten Halbscheibe 2 dienen als zusätzliche Anschlußstellen für zusätzliche Leitungen z.B. bei Betriebsumschaltungen. Beim Einsetzen der ersten Halbscheibe 2 mit dem angeschlossenen Kabel 12 in den Aufnahmerahmen 4 werden die ankommenden Leitungen 11 zur Außenseite des Aufnahmerahmens 4 durch vertiefte Schlitze 20 geführt, die zwischen den Führungsstegen 7 ausgebildet sind.

Eine zur ersten komplementäre zweite Halbscheibe 3 weist andere aneinandergereihte Kontaktteile 13 auf, die sich im wesentlichen parallel zu den Kontaktteilen 9 der ersten Halbscheibe 2 erstrecken. Die Kontaktteile 13 sind frontseitig ebenfalls als Anscblußelemente 10 ausgebildet. Ihr anderes Ende ist als Kontaktfeder 14 ausgebildet, die in eine Kammer der zweiten Halbscheibe 3 hineinragt.

Die Halbscheiben 2, 3 sind rückseitig mit Rastfingern versehen. Eine Rastkuppe 18 der Rastfinger 17 verrastet im eingeschobenen Zustand in Rastlöchern 19 der Seitenschenkel 5 des Aufnahmerahmens 4, dadurch sind die Halbscheiben 2, 3 im Aufnahmerahmen 4 fixiert.

Nach dem Einsetzen in den Aufnahmerahmen 4 bilden die beiden Halbscheiben 2, 3 jeweils eines der Kontaktbauteile 1, bei dem die Kontaktfedern 14 an einer Kontaktzone 22 der Kontaktteile 9 der ersten Halbscheibe zur Anlage kommen. Damit sind die beiden Kontaktteile 9, 13 miteinander verbunden. An die Anschlußelemente 10 der Kontaktteile 13 können nun als Rangierdrähte 15 ausgebildete abgehende Leitungen angeschlossen werden, die über bogenförmige Drahtführungskanäle 16 der zweiten Halbscheibe 3 von der Frontseite zu einem der Seitenschenkel 5 geführt sind.

Durch die getrennt einsetzbaren Halbscheiben 2, 3 ist es möglich, zunächst an die ersten Halbscheiben 2 außerhalb des Aufnahmerahmens in einer geeigneten Hilfsvorrichtung die ankommenden Leitungen 11 des Kabels 12 anzuschließen und in den Aufnahmerahmen 4 einzusetzen. Die zweiten Halbscheiben 3 werden nach Bedarf in späteren Phasen eingesetzt, so daß zunächst nur die einfacheren ersten Halbscheiben benötigt werden. Die Kosten für die zweiten Halbscheiben 3 werden erst im Zuge der verschiedenen Ausbaustufen der Telekommunikationsanlage fällig.

Die rückseitigen Anschlußelemente 10 der ersten Halbscheibe 2 sind zur flachen Außenseite hin abgebogen. Beim Anschließen der ankommenden Leitungen 11 kann die erste Halbscheibe 2 auf eine flache Unterlage aufgelegt werden und die Leitungen 11 können von oben her in die Klemmschlitze der Anschlußelemente 10 hineingedrückt werden.

Die Kontaktteile 9 der ersten Halbscheibe 2 sind teilweise in einem Gehäuse verankert und teilweise zur zweiten Halbscheibe 3 hin freigelegt. Dies wird durch eine Kröpfung 21 erreicht, durch die eine Kontaktzone 22 des Kontaktteils 9 zur Teilungsebene hin ausgebogen wird. Dabei ist darauf geachtet, daß die Kontaktzone 22 und die anschließende, zur Gehäusefrontseite führende Gehäusefläche eine durchgehend glatte Gleitbahn bilden, an der die Kontaktfeder 14 beim Zusammenschieben der beiden Halbscheiben 2, 3 entlanggleiten kann. Durch eine frontseitige Öffnung 26 im Kontaktbauteil 1 kann ein Trennstecker entlang der Gleitbahn eingesteckt werden, die die Kontaktfeder 14 von der Kontaktzone 22 des Kontaktteils 9 abhebt und die Verbindung zwischen den ankommenden Leitungen 11 und den abgehenden Rangierdrähten 15 unterbricht.

Das Kontaktbauteil 1 nach der Figur 3 ist ähnlich aufgebaut, wie das Kontaktbauteil 1 nach den Figuren 1 und 2. Es unterscheidet sich im wesentlichen darin, daß die rückseitigen Anschlußelemente 10 der Kontaktteile 9 zur Rückseite hin gerichtet sind. Dadurch ragen die rückseitigen Anschlußelemente 10 nicht mehr in den Aufnahmebereich für das angrenzende Nachbarbauteil, so daß die einzelnen Kontaktscheiben 2, 3 in beliebiger Reihenfolge in den Aufnahmerahmen eingesetzt werden können. Die Kontaktzone 22 des Kontaktteils 9 ist zur Rückseite hin verlängert, so daß in diesem Bereich ein symbolisiert dargestellter Steckkontakt 23 eines Schutzsteckers kontaktiert werden kann, der durch Öffnungen in der Rückseite des Kontaktbauteils eingeführt werden kann.

Ein ähnliches Kontaktbauteil 1 ist in Figur 4 dargestellt. Es unterscheidet sich von dem Kontaktbauteil 1 nach Figur 3 dadurch, daß das Kontaktteil 9 der ersten Halbscheibe 2 kein frontseitiges Anschlußelement aufweist und lediglich vom rückseitigen Anschlußelement 10 bis zur Kontaktzone 22 reicht. Die zweite Halbscheibe 3 ist mit der nach Figur 3 identisch. Der Verzicht auf die zusätzlichen Anschlußstellen der vorderen Anschlußelemente 10 verringert den Herstellungsaufwand. Ein derartiges Kontaktbauteil eignet sich insbesondere für Einsatzfälle, bei denen nicht mit dem Anschluß zusätzlicher Leitungen zu rechnen ist.

Ein weiteres Kontaktteil 1 nach den Figuren 5 und 6 ist aus zwei Halbscheiben 2, 3 zusammengesetzt, die beide front- und rückseitige Anschlußelemente 10 aufweisen. Die obere erste Halbscheibe 2 ist mit der nach Figur 3 identisch. Die untere zweite Halbscheibe 3 weist geradlinig durchgehende Kontaktteile 13 auf, bei denen die Kontaktfeder 14 aus einem Mittelabschnitt ohne Materialverlust durch Scheren freigeschnitten und herausgebogen ist. Ein derartiges Kontaktteil ermöglicht es, neben den in Kabeln 12 ankommenden Leitungen 11 auch die abgehenden Leitungen 24 in abgehenden Kabeln 12 zusammenzufassen. Damit sind die von den Vermittlungseinrichtungen ankommenden Kabel 12 und die zu den Teilnehmern führenden abgehenden Kabel 12 an ein und demselben Kontaktbauteil 1 angeschlossen, so daß keine zwischenliegenden Rangierdrähte benötigt werden.

Elektronische Vermittlungseinrichtungen machen nachträgliche Umrangierungen z.B. beim Umzug eines Teilnehmers innerhalb des Amtsbereiches überflüssig. Dennoch kann es vorkommen, daß ein Teilnehmer mit einem anderen Verteilerbereich verbunden werden muß, z.B. an einen Sonderdienst angeschlossen werden.

In diesem Falle kann die unmittelbare Verbindung zwischen der ankommenden und der abgehenden Leitung durch einen in der Pfeilrichtung einschiebbaren Trennstecker 25 unterbrochen werden. An das frontseitige Anschlußelement 10 der ersten Halbscheibe 2 wird dann eine Rangierleitung 15 angeschlossen, die zu einem anderen Kontaktbauteil verlegt wird, bei dem die ankommenden und abgehenden Leitungen in gleicher Weise durch einen Trennstecker getrennt sind. Ein solches Ende einer anderen Rangierleitung 15 ist hier an das frontseitige Anschlußelement 10 der zweiten Halbscheibe 3 angeschlossen und mit einer der abgehenden Leitungen 24 verbunden.

Nach Figur 7 sind mehrere gleiche erste Halbscheiben 2 unmittelbar übereinandergestapelt, die mit der ersten Halbscheibe 2 nach Figur 3 identisch sind. In besonderen Einsatzfällen ist es möglich, auf die Unterbrechungsmöglichkeit bei diesen Teilen zu verzichten. Die z.B. von dem Kontaktbauteil 1 nach Figur 2 ankommenden Rangierleitungen 15 sind an die frontseitigen Anschlußelemente 10 der Kontaktteile 9 angeschlossen. Diese erstrecken sich weitgehend geradlinig zu den rückseitigen Anschlußelementen 10, an die die zu den Vermittlungseinrichtungen führenden abgehenden Leitungen 23 angeschlossen sind.

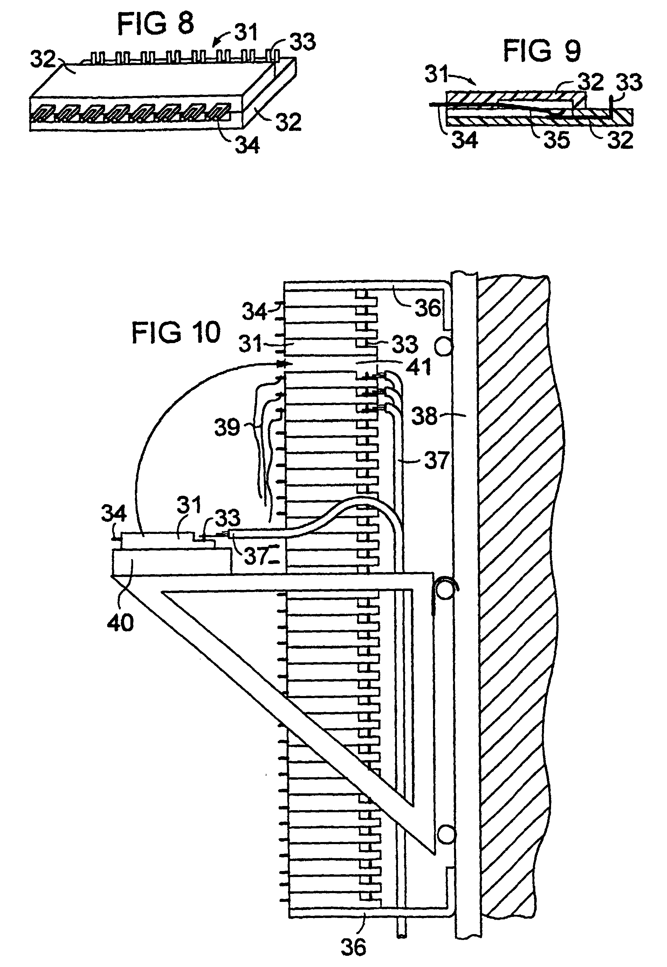

Nach den Figuren 8 und 9 besteht ein scheibenartiges Kontaktbauteil 31 aus zwei scheibenartig flachen Teilgehäusen 32 und Anschlußelemente 33, 34 für ankommende bzw. abgehende Leitungen. Dabei sind die Anschlußelemente 33 bzw. 34 für die ankommenden bzw. abgehenden Leitungen jeweils einem der Teilgehäuse 32 zugeordnet. Die Anschlußelemente 34 für die abgehenden Leitungen sind im Inneren des Kontaktbauteils als Kontaktfedern 35 ausgebildet, die mit den Anschlußelementen 33 für die ankommenden Leitungen trennbar verbunden sind. Die Gehäuseteile 32 mit den darin befestigten Anschlußelementen 33, 34 sind so ausgebildet, daß sie durch einen einfachen Fügevorgang sandwichartig zum Kontaktbauteil 31 zusammengesetzt werden können, wobei die Kontaktfeder 35 mit dem Anschlußelement 33 für die ankommenden Leitungen kontaktiert wird.

Nach Figur 10 können die scheibenartig flachen Kontaktbauteile 31 in einer Aufnahmerahmen 36 übereinander gestapelt aufgenommen werden. Dieser ist einem Verteiler in einer Telekommunikationsanlage zugeordnet. Dabei sind die ankommenden Leitungen 37 in Kabeln zusammengefaßt, die auf der einem Tragrahmen 38 zugewandten Rückseite der Kontaktbauteile 31 an die Anschlußelemente 33 herangeführt sind. Auf der der Rückseite gegenüberliegenden leicht zugänglichen Frontseite der Kontaktbauteile 31 sind an die Anschlußelemente 34, die als Rangierdrähte ausgebildeten abgehenden Leitungen 39 angeschlossen. Die ankommenden Leitungen 37 führen zur Vermittlungseinrichtung der Telekommunikationsanlage. Die abgehenden Leitungen 39 sind zu anderen Kontaktbauteilen verlegt, an deren Rückseite in ähnlicher Weise die zu den Teilnehmern führenden Kabel angeschlossen sind.

Die Kontaktbauteile 31 sind in dem Aufnahmerahmen 36 so aufgenommen, daß sie in diesen einzeln eingesetzt werden können. Am Tragrahmen 38 ist eine als Montageplatz 40 dienende Hilfseinrichtung eingehängt, auf der ein Kontaktbauteil 31 so fixiert werden kann, daß die aus dem Verteiler herausgezogenen Enden der ankommenden Leitungen 37 in einfacher Weise an die rückseitigen Anschlußelemente 33 der Reihe nach angeschlossen werden können. Die Arbeitsebene des Montageplatzes 40 kann dabei in einer ergonomisch günstigen Höhe vor dem Verteiler angeordnet werden. Danach kann das Kontaktbauteil 31 mit den angeschlossenen ankommenden Leitungen 37 gemäß dem dargestellten bogenförmigen Pfeil in seinen vorgesehenen Einbauplatz 41 im Aufnahmerahmen 36 eingesetzt werden. Nach dem Einsetzen der Kontaktbauteile 31 des Aufnahmerahmens 36 kann der mobile Montageplatz 40 an einer anderen Stelle des Verteilers angebracht werden.

Es ist auch möglich, das Kontaktbauteil 31 mit den Teilgehäusen 32 erst im Aufnahmerahmen 36 zusammen zu setzen. Die ankommenden Leitungen 37 werden z.B. an die Anschlußelemente 33 des Teilgehäuses 32 außerhalb des Verteilerraums angeschlossen und zusammen mit diesem zum Verteiler verlegt. Da die Querschnittsabmessungen des Teilgehäuses 32 geringer sind als die des Kontaktbauteils 31, kann es zusammen mit den angeschlossenen ankommenden Leitungen 33 zum Verteiler verlegt werden.

## Patentansprüche

1. Kontaktbauteil für den Verteiler einer Telekommunikationsanlage, das scheibenartig und stapelbar ausgebildet sowie aus zwei separaten Halbscheiben zusammengesetzt ist, von denen das eine Kontaktteile (9) für ankommende Leitungen (11) und das andere Kontaktteile (13) für abgehende Leitungen (24) aufweist, wobei die Kontaktteile (9) für die ankommenden Leitungen(11) unddieKontaktteile(13)fürdieabgehenden Leitungen (15, 24) beim Zusammensetzen der Halbscheiben (2, 3) miteinander kontaktierbar sind, wobei die Kontaktteile (9) für die ankommenden Leitungen (11) mit den Kontaktteilen für die abgehenden Leitungen (24) durch Kontaktfedern (14), die an den Kontaktteilen (13) von zumindest einer der beiden Halbscheiben (3) ausgebildet sind, an einer Kontaktstelle (22) paarweise trennbar verbunden sind, und wobei die Kontaktteile (9) für die ankommenden Leitungen (11) und die Kontaktteile (13) für die abgehenden Leitungen (24) jeweils in einer Reihe angeordnet sind und an wenigstens einem ihrer Enden Anschlußelemente (10) für die ankommenden bzw. abgehenden Leitungen (11 bzw. 24) aufweisen, wobei die Halbscheiben (2, 3) als mit flachen Außenseiten versehene, sandwichartig zusammengefügte Halbscheiben ausgebildet sind, deren Teilungsebene sich parallel zu den flachen Außenseiten erstreckt, wobei die Kontaktteile (9, 13) im wesentlichen flach ausgebildet sind und sich parallel zur Teilungsebene derart erstrecken, daß die Kontaktzonen (22) im Bereich einer in der Teilungsebene zwischen den Halbscheiben (2, 3) liegenden Gehäusefläche angeordnet ist, wobei sich die Kontaktteile (9, 13) in Richtung senkrecht zur Teilungsebene kontaktieren, **dadurch gekennzeichnet, daß** die Kontakteile (9) der einen Halbscheibe (2) teilweise in dieses eingelassen und teilweise unter Ausbildung der Kontaktzone (22) zur anderen Halbscheibe (3) hin mittels einer Kröpfung (21) freigelegt sind, durch welche die Kontaktzone (22) des zugehörigen Kontaktteils (9) zur Teilungsebene hin ausgebogen ist, wobei die der anderen Halbscheibe (3) zugewandte Gehäusefläche der einen Halbscheibe (2) und die Kontaktzone (22) eine durchgehen glatte Gleitbahn ausbilden, so daß die Halbscheiben (2, 3) zur Herstellung des Kontakts an der Kontaktzone (22) mit der Kontaktfeder (14) entlang der Gleitbahn gleitend entlang dieser zusammenschiebbar sind.

2. Kontaktbauteil nach Anspruch 1, **dadurch gekennzeichnet, daß** die Halbscheiben (2, 3) sich wechselseitig hintergreifende Ansätze aufweisen, mittels derer sie zusammengehalten sind.

3. Kontaktbauteil nach Anspruch 1 oder 2, **dadurch gekennzeichnet, daß** jede der beiden Halbscheiben (2, 3) mit Führungsmitteln (8) und Haltemitteln (17, 18) versehen ist, mittels derer sie getrennt und unabhängig voneinander in einen Aufnahmerahmen (4) einsetzbar sind, der komplementäre Führungs- und Haltemittel (7 und 19) aufweist.

4. Kontaktbauteil nach Anspruch 1, 2 oder 3, **dadurch gekennzeichnet, daß** die Anschlusselemente (10) der Kontaktteile (13) zumindest einer der beiden Halbscheiben (3) auf einer für das Bedienpersonal gut zugänglichen Frontseite des Verteilers angeordnet sind und daß die Kontaktteile (9) der anderen Halbscheibe (2) Anschlußelemente (10) auf der der Frontseite gegenüberliegenden Rückseite des Kontaktbauteils (1) aufweisen.

5. Kontaktbauteil nach Anspruch 4, **dadurch gekennzeichnet, daß** die Kontaktteile (9) mit den rückseitigen Anschlußelementen (10) zusätzliche Anschlußelemente (10) auf der Frontseite des Kontaktbauteils (1) aufweisen.

6. Kontaktbauteil nach Anspruch 5, **dadurch gekennzeichnet, daß** die Kontaktteile (9, 13) beider Halbscheiben (2, 3) auf beiden Seiten mit den Anschlußelementen (10) versehen sind.

7. Kontaktbauteil nach Anspruch 6, **dadurch gekennzeichnet, daß** die ankommenden und die abgehenden Leitungen (11, 24) in Kabeln zusammengefaßt an das Kontaktbauteil (1) heranführbar sind und an die rückseitigen Anschlusselemente (10) der beiden Halbscheiben (2, 3) anschließbar sind, daß die Federkontaktverbindung zwischen den Kontaktteilen der einzelnen Paare mittels eines einschiebbaren Trennsteckers (25) auftrennbar ist und daß an die frontseitigen Anschlußelemente Rangierdrähte (15) anschließbar sind, die zu anderen Kontaktbauteilen verlegt sind.

8. Kontaktbauteil nach Anspruch 7, **dadurch gekennzeichnet, daß** die Kontaktfeder (14) aus einem Mittelabschnitt des Kontaktteils ausgeschnitten und zur einen Halbscheibe hin abgespreizt ist.

9. Kontaktbautteil nach einem der vorhergehenden Ansprüche, **dadurch gekennzeichnet, daß** sich die rückseitigen Anschlußelemente (10) parallel zur Teilungsebene erstrecken und zur Rückseite hin ragen.

10. Kontaktbauteil nach einem der vorhergehenden Ansprüche, **dadurch gekennzeichnet, daß** die Halbscheiben von der Frontseite her zur Rückseite in den Aufnahmerahmen einschiebbar sind und daß die Fügerichtung der beiden Halbscheiben gleich dieser Einschubrichtung ist.

11. Verfahren zum Anschließen von elektrischen Leitungen (37, 39) an einen Verteiler einer Telekommunikationsanlage nach einem der vorhergehenden Ansprüche,
wobei die in Kabeln zusammengefaßten ankommenden Leitungen (37) an Anschlußelemente (33) von stapelbaren Kontaktbauteilen (31) angeschlossen werden, die einzeln in Einbauplätze (41) eines Aufnahmerahmens (36) des Verteilers einsetzbar sind,
wobei an zusätzliche Anschlußelemente (34) der Kontaktbauteile (31) abgehende Leitungen (39) angeschlossen werden,
wobei die Kontaktbauteile (31) mit den Anschlußelementen (33, 34) verbundene Kontaktfedern (35) aufweisen, über die die Anschlußelemente (33) für die ankommenden Leitungen mit den Anschlußelementen (34) für die abgehenden Leitungen trennbar verbunden werden und
wobei die Kontaktbauteile (31) aus zwei getrennten Teilgehäusen (32) zusammengesetzt werden, die jeweils die Anschlußelemente (33, 34) für die ankommenden oder die abgehenden Leitungen (37, 39) enthalten,
**dadurch gekennzeichnet,**
**daß** außerhalb des Einbauplatzes (41) für das Kontaktbauteil (31) ein Montageplatz (40) vorgesehen wird,
**daß** die Leitungen (37) an diesem an die Kontaktbauteile (31) angeschlossen werden,
**daß** danach die Kontaktbauteile (31) mit den angeschlossenen Leitungen (37) in'die vorgesehenen Einbauplätze (41) des Aufnahmerahmens (36) eingesetzt werden.

12. Verfahren nach Anspruch 11,
**dadurch gekennzeichnet,**
**daß** der Montageplatz (40) außerhalb des Verteilerraums angeordnet ist,
**daß** die Kabel (z.B. 37) mit den angeschlossenen Kontaktbauteilen (31) zum Verteiler verlegt werden und
**daß** danach die Kontaktbauteile (31) in die Einbauplätze (41) eingesetzt werden.

13. Verfahren nach Anspruch 11,
**dadurch gekennzeichnet,**
**daß** der mobil ausgebildete Montageplatz (40) Hilfseinrichtungen zum Kabelanschluß aufweist, die in der Nähe des jeweiligen Einbauplatzes (41) angeordnet werden und
**daß** das Kontaktbauteil (31) nach dem Anschluß des Kabels in den Einbauplatz (11) eingesetzt wird.

14. Verfahren nach Anspruch 11, 12 oder 13,
**dadurch gekennzeichnet,**
**daß** die Kabel außerhalb des Verteilers an die zugehörigen Teilgehäuse (32) angeschlossen werden und
**daß** die Teilgehäuse (32) erst mit dem Einsetzen in den Verteiler zu den Kontaktbauteilen (31) zusammengesetzt werden.

15. Verfahren nach Anspruch 14,
**dadurch gekennzeichnet,**
**daß** die abgehenden Leitungen (39) ebenfalls in Kabeln zusammengefaßt sind und außerhalb ihrer Einbauplätze (41) an die zugehörigen Teilgehäuse (32) angeschlossen werden.

## Claims

1. Contact assembly for the distributor of a telecommunications system which is constructed in a plate-like and stackable fashion, and is composed of two separate half plates, of which one has contact components (9) for incoming lines (11) and the other has contact components (13) for outgoing lines (24), the contact components (9) for the incoming lines (11) and the contact components (13) for the outgoing lines (15, 24) being capable of being placed in contact with one another when the half plates (2, 3) are assembled, the contact components (9) for the incoming lines (11) being connected in pairs, in a disconnectable way, at a contact point (22) to the contact components for the outgoing lines (24) by means of contact springs (14) which are constructed at the contact components (13) of at least one of the two half plates (3), and the contact components (9) for the incoming lines (11) and the contact components (13) for the outgoing lines (24) each being arranged in a row and having connection elements (10) for the incoming and outgoing lines (11 and 24) at at least one of their ends, the half plates (2, 3) being constructed as half plates which are provided with flat outer sides, are joined in a sandwich-like fashion and have a plane of separation which extends parallel to the flat outer sides, the contact components (9, 13) being of essentially flat construction and extending parallel to the plane of separation such that the contact zones (22) are arranged in the region of a housing face which lies in the plane of separation between the half plates (2, 3) while the contact components (9, 13) are in contact in the direction perpendicular to the plane of separation, **characterized in that** the contact components (9) of the one half plate (2) are partially let into the latter and are partially exposed, so as to form the contact zone (22) with the other half plate (3), by means of a bend (21) by means of which the contact zone (22) of the associated contact component (9) is bent out towards the plane of separation, that housing face of the one half plate which faces the other half plate and the contact zone (22) forming a smooth slider track so that the half plates (2, 3) can be pushed together in a sliding fashion along the slider track in order to make contact on the contact zone (22) with the contact spring (14) along the slider track.

2. Contact assembly according to Claim 1, **characterized in that** the half plates (2, 3) have projections which engage mutually one behind the other and by means of which they are held together.

3. Contact assembly according to Claim 1 or 2, **characterized in that** each of the two half plates (2, 3) is provided with guide means (8) and securing means (17, 18) by means of which they can be inserted separately and independently of one another into a holding frame (4) which has complementary guiding and securing means (7 and 19).

4. Contact assembly according to Claim 1, 2 or 3, **characterized in that** the connection elements (10) of the contact components (13) of at least one of the two half plates (3) are arranged on the front side of the distributor which is easily accessible for the operators, and **in that** the contact components (9) of the other half plate (2) have connection elements (10) on the rear of the contact assembly (1) lying opposite the front side.

5. Contact assembly according to Claim 4, **characterized in that** the contact components (9) with the rear connection elements (10) have additional connection elements (10) on the front of the contact assembly (1).

6. Contact assembly according to Claim 5, **characterized in that** the contact components (9, 13) of the two half plates (2, 3) are provided with the connection elements (10) on both sides.

7. Contact assembly according to Claim 6, **characterized in that** the incoming and the outgoing lines (11, 24) can be led, combined in cables, to the contact assembly (1) and can be connected to the rear connection elements (10) of the two half plates (2, 3), **in that** the spring contact connection between the contact components of the individual pairs can be disconnected by means of an insertable disconnecting plug (25), and **in that** patching wires (15) which are laid to other contact assemblies can be connected to the front connection elements.

8. Contact assembly according to Claim 7, **characterized in that** the contact spring (14) is cut out of a centre section of the contact component and bent away towards the other half plate (2).

9. Contact assembly according to one of the preceding claims, **characterized in that** the rear connection elements (10) extend parallel to the plane of separation and project towards the rear.

10. Contact assembly according to one of the preceding claims, **characterized in that** the half plates can be inserted into the holding frame from the front towards the rear, and **in that** the joining direction of the two half plates is identical with this insertion direction.

11. Method for connecting electrical lines (37, 39) to a distributor of a telecommunications system according to one of the preceding claims,
the incoming lines (37) which are combined in cables being connected to connection elements (33) of stackable contact assemblies (31) which can be individually inserted into installation locations (41) of a holding frame (36) of the distributor,
outgoing lines (39) being connected to additional connection elements (34) of the contact assemblies (31), the contact assemblies (31) having contact springs (35) which are connected to the connection elements (33, 34) and by means of which the connection elements (33) for the incoming lines are connected to the connection elements (34) for the outgoing lines in a disconnectable way, and
the contact assemblies (31) being composed of two separate housing components (32) which each contain the connection elements (33, 34) for the incoming or the outgoing lines (37, 39), **characterized**
**in that** a mounting location (40) is provided outside the installation location (41) for the contact assembly (31),
**in that** the lines (37) are connected to the contact assemblies (31) at the said mounting location (40),
**in that**, afterwards, the contact assemblies (31) with the connected lines (37) are inserted into the installation locations (41) provided in the holding frame (36).

12. Method according to Claim 11, **characterized**
**in that** the mounting location (40) is arranged outside the distributor space,
**in that** the cables (for example 37) with the connected contact assemblies (31) are laid to the distributor, and
**in that**, afterwards, the contact assemblies (31) are inserted into the installation locations (41).

13. Method according to Claim 11, **characterized**
**in that** the mounting location (40) which is of mobile construction has auxiliary devices for cable connection, which auxiliary devices are arranged in the proximity of the respective installation location (41), and
**in that** the contact assembly (31) is inserted into the installation location (41) after the connection of the cable.

14. Method according to Claim 11, 12 or 13, **characterized in that** the cables are connected to the associated housing components (32) outside the distributor, and
**in that** the housing components (32) are not assembled to form the contact assemblies (31) until the insertion into the distributor.

15. Method according to Claim 14, **characterized in that** the outgoing lines (39) are also combined in cables and are connected, outside their installation locations (41), to the associated housing components (32).

## Revendications

1. Composant de contact pour le répartiteur d'une installation de télécommunication, lequel est réalisé sous la forme de plaquettes et empilable et se compose de deux demi-plaquettes séparées dont l'une présente des éléments de contact (9) pour les lignes entrantes (11) et l'autre des éléments de contact (13) pour les lignes sortantes (24), les éléments de contact (9) pour les lignes entrantes (11) et les éléments de contact (13) pour les lignes sortantes (15, 24) pouvant être mis en contact lors de l'assemblage des demi-plaquettes (2, 3) entre elles, les éléments de contact (9) pour les lignes entrantes (11) et les éléments de contact pour les lignes sortantes (24) étant reliés par paires séparables au niveau d'une zone de contact (22) par des ressorts de contact (14) qui sont réalisés sur les éléments de contact (13) par au moins l'une des deux demi-plaquettes (3), et les éléments de contact (9) pour les lignes entrantes (11) et les éléments de contact (13) pour les lignes sortantes (24) étant respectivement disposés en ligne et présentant au moins à l'une de leurs extrémités des éléments de raccordement (10) pour les lignes entrantes ou sortantes (11 ou 24), les demi-plaquettes (2, 3) étant réalisées sous la forme de demi-plaquettes présentant des côtés extérieurs plats et étant réunies à la manière d'un sandwich dont le plan de séparation s'étend parallèlement aux côtés extérieurs plats, les éléments de contact (9, 13) étant pour l'essentiel plats et s'étendant parallèlement au plan de séparation de manière à ce que les zones de contact (22) soient disposées dans la zone d'une surface de boîtier qui se trouve dans le plan de séparation entre les demi-plaquettes (2, 3), les éléments de contact (9, 13) entrant en contact dans une direction perpendiculaire au plan de séparation, **caractérisé en ce que** les éléments de contact (9) de l'une des demi-plaquettes (2) sont partiellement insérés dans celle-ci et partiellement dégagés en formant la zone de contact (22) vers l'autre demi-plaquette (3) au moyen d'une excroissance (21) à l'aide de laquelle la zone de contact (22) de l'élément de contact correspondant (9) est courbée en direction du plan de séparation, la surface de boîtier de l'une des demi-plaquettes (2) qui est dirigée vers l'autre demi-plaquette (3) et la zone de contact (22) formant une bande de glissement lisse de manière à ce que les demi-plaquettes (2, 3) puissent coulisser ensemble en glissant le long de la bande de glissement pour établir le contact au niveau de la zone de contact (22) avec le ressort de contact (14).

2. Composant de contact selon la revendication 1, **caractérisé en ce que** les demi-plaquettes (2, 3) présentent des appendices qui s'emboîtent mutuellement à l'aide desquels elles sont maintenues ensemble.

3. Composant de contact selon la revendication 1 ou 2, **caractérisé en ce que** chacune des deux demi-plaquettes (2, 3) est munie de moyens de guidage (8) et de moyens de maintien (17, 18) à l'aide desquels elles peuvent être insérées séparément et indépendamment l'une de l'autre dans un cadre d'accueil (4) qui présente des moyens de guidage et de maintien (7 et 19) complémentaires.

4. Composant de contact selon la revendication 1, 2 ou 3, **caractérisé en ce que** les éléments de raccordement (10) des éléments de contact (13) d'au moins l'une des deux demi-plaquettes (3) sont disposés sur une face avant du répartiteur facilement accessible au personnel de service et que les éléments de contact (9) de l'autre demi-plaquette (2) présentent des éléments de raccordement (10) sur la face arrière du composant de contact (1), qui est opposée à la face avant.

5. Composant de contact selon la revendication 4, **caractérisé en ce que** les éléments de contact (9) munis des éléments de raccordement (10) en face arrière présentent des éléments de raccordement (10) supplémentaires sur la face avant du composant de contact (1).

6. Composant de contact selon la revendication 5, **caractérisé en ce que** les éléments de contact (9, 13) des deux demi-plaquettes (2, 3) sont munis des éléments de raccordement (10) des deux côtés.

7. Composant de contact selon la revendication 6, **caractérisé en ce que** les lignes entrantes et sortantes (11, 24) peuvent être acheminées au composant de contact (1) regroupées dans des câbles et peuvent être raccordées aux éléments de raccordement (10) en face arrière des deux demi-plaquettes (2, 3), que la liaison par contact à ressort entre les éléments de contact de chacune des paires peut être séparée au moyen d'une fiche de séparation enfichable (25) et que des jarretières (15) qui mènent à d'autres composants de contact peuvent être raccordées aux éléments de raccordement en face avant.

8. Composant de contact selon la revendication 7, **caractérisé en ce que** les ressorts de contact (14) sont découpés dans une section centrale de l'élément de contact et écartés vers une demi-plaquette.

9. Composant de contact selon l'une des revendications précédentes, **caractérisé en ce que** les éléments de raccordement (10) en face arrière s'étendent parallèlement au plan de séparation et font saillie vers la face arrière.

10. Composant de contact selon l'une des revendications précédentes, **caractérisé en ce que** les demi-plaquettes peuvent être insérées dans le cadre d'accueil à partir de la face avant vers la face arrière et que le sens d'emboîtement des deux demi-plaquettes est identique à ce sens d'insertion.

11. Procédé de connexion de lignes électriques (37, 39) sur un répartiteur d'une installation de télécommunication selon l'une des revendications précédentes,
les lignes entrantes (37) regroupées en câbles étant raccordées à des éléments de raccordement (33) de composants de contact (31) empilables qui peuvent être insérés individuellement dans les emplacements d'insertion (41) d'un cadre d'accueil (36) du répartiteur,
les lignes sortantes (39) étant raccordées à des éléments de raccordement supplémentaires (34) des composants de contact (31),
les composants de contact (31) présentant des ressorts de contact (35) reliés aux éléments de raccordement (33, 34) et par le biais desquels les éléments de raccordement (33) pour les lignes entrantes sont reliés de manière séparable aux éléments de raccordement (34) pour les lignes sortantes et
les composants de contact (31) étant composés de deux boîtiers partiels (32) séparés qui comprennent chacun les éléments de raccordement (33, 34) pour les lignes entrantes ou sortantes (37, 39),
**caractérisé en ce**
**qu'**un emplacement de montage (40) est prévu à l'extérieur de l'emplacement d'insertion (41) pour le composant de contact (31),
**que** les lignes (37) sont raccordées aux composants de contact (31) au niveau de celui-ci,
**que** les composants de contact (31) sont ensuite insérés avec les lignes (37) raccordées dans les emplacements d'insertion (41) prévus à cet effet du cadre d'accueil (36).

12. Procédé selon la revendication 11,
**caractérisé en ce**
**que** l'emplacement de montage (40) se trouve en-dehors de l'espace du répartiteur,
**que** les câbles (par exemple 37) auxquels sont raccordés les composants de contact (31) sont posés vers le répartiteur et
**qu'**ensuite les composants de contact (31) sont insérés dans les emplacements d'insertion (41).

13. Procédé selon la revendication 11,
**caractérisé en ce**
**que** l'emplacement de montage (40) réalisé de manière à être mobile présente des dispositifs auxiliaires pour le raccordement des câbles qui sont disposés à proximité de l'emplacement d'insertion (41) correspondant et
**que** le composant de contact (31) est inséré dans l'emplacement d'insertion (41) après le raccordement du câble.

14. Procédé selon la revendication 11, 12 ou 13,
**caractérisé en ce**
**que** les câbles sont raccordés en dehors du répartiteur aux boîtiers partiels (32) correspondants et
**que** les boîtiers partiels (32) ne sont assemblés pour former les composants de contact (31) que lors de leur insertion dans le répartiteur.

15. Procédé selon la revendication 14,
**caractérisé en ce**
**que** les lignes sortantes (39) sont également regroupées en câbles et raccordées aux boîtiers partiels (32) correspondants en dehors de leurs emplacements d'insertion (41).
